# FASCICULE DE BREVET EUROPEEN

(11) **EP 2 817 498 B1**
(45) Date de publication et mention de la délivrance du brevet: **20.04.2016**
(21) Numéro de dépôt: 13706647.8
(22) Date de dépôt: 07.02.2013
(51) Int. Cl.: F02C 7/232, F02C 9/26, F23D 11/26, F23K 5/14

(54) **INJECTEUR DE CARBURANT POUR UNE TURBOMACHINE**
BRENNSTOFF-EINSPRITZDÜSE FÜR GASTURBINE
FUEL INJECTION NOZZLE FOR GAS TURBINE

(30) Priorité: 24.02.2012 FR 1251728
(43) Date de publication de la demande: 31.12.2014
(73) Titulaire: SNECMA, 75015 Paris (FR)
(72) Inventeur: RODRIGUES, José, Roland, F-77550 Moissy Cramayel Cedex (FR); POUSSEO, Emilie, Charlotte, F-77550 Moissy Cramayel Cedex (FR)
(74) Mandataire: Robert, Mathias
(86) Numéro de dépôt international: PCT/FR2013/050256
(87) Numéro de publication internationale: WO 2013/124566

(56) Documents cités:
- EP-A1- 1 312 864
- FR-A1- 2 832 492
- US-A1- 2010 037 615

## Description

La présente invention concerne un injecteur de carburant pour une turbomachine, telle qu'un turboréacteur ou un turbopropulseur d'avion.

Une turbomachine comporte classiquement une chambre de combustion annulaire comportant à son extrémité amont des injecteurs de carburant, régulièrement répartis, et des moyens d'amenée d'air autour des injecteurs.

Il existe principalement deux types d'injecteurs, à savoir les injecteurs dits aéromécaniques comportant deux circuits de carburant offrant des débits de carburant adaptés à des phases de fonctionnement différentes de la turbomachine, (phase d'allumage, phase de fonctionnement à faible ou à pleine puissance), et les injecteurs dits aérodynamiques qui ne comportent qu'un seul circuit de carburant pour toutes les phases de fonctionnement de la turbomachine.

La demande de brevet FR 2 832 492, au nom de la Demanderesse, décrit un injecteur de type aéromécanique, comportant un circuit primaire de carburant destiné par exemple à une phase d'allumage et de faible puissance, et un circuit secondaire intervenant dans les phases de fonctionnement ultérieures, de moyenne à forte puissance, en complément du circuit primaire. Un autre injecteur selon le préambule de la revendication 1 est connu du document de demande de brevet EP 1 312 864 A1.

Ce type d'injecteur comporte un corps comprenant des moyens d'admission de carburant sous pression, une soupape d'arrêt montée dans le corps en aval des moyens d'admission et conçue pour s'ouvrir sous une première pression déterminée de carburant et pour rester ouverte au-delà de cette première pression afin d'alimenter un circuit primaire de carburant, une soupape de dosage montée dans le corps en aval de la soupape d'arrêt et conçue pour s'ouvrir au-delà d'une seconde pression déterminée de carburant, supérieure à la première pression, et pour rester ouverte au-delà de la seconde pression afin d'alimenter un circuit secondaire de carburant.

Le réglage du débit de carburant dans le circuit secondaire est réalisé par l'intermédiaire de fentes de dosage ménagées dans la soupape de dosage et dont les sections de passage varient en fonction de la position de cette soupape, c'est-à-dire en fonction de la pression d'alimentation en carburant. Plus la pression d'alimentation en carburant est élevée, plus les sections de passage des fentes sont grandes.

Dans les phases d'allumage et de fonctionnement à bas régime, la soupape de dosage est fermée. Le carburant présent dans le circuit secondaire ne circule pas et est soumis à des températures importantes. Ceci peut provoquer la cokéfaction du carburant dans le circuit secondaire, ce qui est préjudiciable au bon fonctionnement et à la durée de vie de l'injecteur.

Ce phénomène se présente par exemple en cas de descente de l'avion, lors d'une période de fonctionnement à faible régime succédant à une période de fonctionnement à plein régime. Dans ce cas, l'environnement de l'injecteur peut atteindre des températures comprises entre 80 et 600°C.

Il existe des moyens pour limiter l'échauffement de carburant dans le circuit secondaire, tels que la mise en place d'un ou plusieurs écrans thermiques. Il pourrait également être envisagé de générer une fuite de carburant du circuit primaire vers le circuit secondaire.

Une telle fuite empêcherait la stagnation du carburant dans le circuit secondaire et éviterait ainsi sa cokéfaction.

Toutefois, cette fuite serait présente dans toute la plage de fonctionnement de la turbomachine, c'est-à-dire aussi bien à l'allumage et à faible régime qu'à plein régime, et générerait une hétérogénéité dans la chambre de combustion, ce qui nuirait aux performances de la turbomachine.

L'invention a notamment pour but d'apporter une solution simple, efficace et économique à ce problème.

A cet effet, elle propose un injecteur de carburant pour une turbomachine telle qu'un turboréacteur ou un turbopropulseur d'avion, comportant un corps comprenant des moyens d'admission de carburant sous pression, une soupape d'arrêt montée dans le corps en aval des moyens d'admission et conçue pour s'ouvrir sous une première pression déterminée de carburant et pour rester ouverte au-delà de cette première pression afin d'alimenter un circuit primaire de carburant, une soupape de dosage montée dans le corps en aval de la soupape d'arrêt et conçue pour s'ouvrir au-delà d'une seconde pression déterminée de carburant, supérieure à la première pression, et pour rester ouverte au-delà de la seconde pression afin d'alimenter un circuit secondaire de carburant, caractérisé en ce qu'il comporte au moins un canal de fuite s'étendant depuis une zone située en aval de la soupape d'arrêt et en amont de la soupape de dosage jusque dans une zone située en aval de la soupape de dosage, destiné à générer un débit de fuite dans le circuit secondaire, le canal de fuite étant conçu pour être ouvert dans une position de fermeture de la soupape de dosage et pour être fermé par déplacement de la soupape de dosage.

De cette manière, un débit de fuite circule au travers du canal de fuite et alimente le circuit secondaire uniquement lorsque la soupape de dosage est fermée, c'est-à-dire uniquement pendant les phases d'allumage et de fonctionnement à bas régime.

Au contraire, lors d'une phase de fonctionnement à moyen ou à haut régime, la pression d'alimentation en carburant est suffisamment forte pour déplacer et ouvrir la soupape de dosage, ce qui entraîne la fermeture du canal de fuite et annule ainsi le débit de fuite.

Un tel injecteur évite donc la cokéfaction du carburant présent dans le circuit secondaire lors des phases d'allumage et à faible régime, sans toutefois pénaliser les performances de la turbomachine à moyen ou à fort régime.

Selon une caractéristique de l'invention, le corps comporte au moins une première chambre située en aval de la soupape d'arrêt et en amont de la soupape de dosage, reliée fluidiquement ou appartenant au circuit primaire de carburant, au moins une seconde chambre située en aval de la soupape de dosage et apte à être isolée de la première chambre par la soupape de dosage lorsque celle-ci est fermée, la seconde chambre étant reliée fluidiquement ou appartenant au circuit secondaire de carburant, le canal de fuite étant ménagé dans la soupape de dosage de façon à relier les première et seconde chambres dans une position fermée de la soupape de dosage.

De préférence, la soupape de dosage est fermée sur une première partie de sa course puis ouverte progressivement sur une seconde partie de sa course, la fermeture du canal de fuite s'opérant sur la première partie de la course de la soupape de dosage.

La fermeture du canal de fuite est ainsi réalisée avant que les fentes de dosage de la soupape de dosage ne débouchent dans la zone située en aval de ladite soupape et reliée au circuit secondaire.

Selon une autre caractéristique de l'invention, le canal de fuite comporte des moyens de calibration du débit de fuite.

Dans ce cas, la soupape de dosage est montée mobile de façon étanche dans une partie tubulaire fixe par rapport au corps, la partie tubulaire comportant au moins un orifice de fuite, le canal de fuite ménagé dans la soupape de dosage comportant une première extrémité destinée à déboucher en regard de l'orifice de fuite dans une position fermée de la soupape de dosage et à être éloignée de l'orifice de fuite par déplacement de la soupape de dosage, le canal de fuite comportant en outre une seconde extrémité débouchant dans la seconde chambre.

Avantageusement, le canal de fuite comporte une partie s'étendant selon l'axe de la soupape de dosage, débouchant dans la seconde chambre et dans laquelle sont montés les moyens de calibration du débit de fuite, et une partie radiale débouchant dans la partie axiale du canal de fuite et en regard de l'orifice de fuite.

L'invention concerne en outre une turbomachine, telle qu'un turboréacteur ou un turbopropulseur d'avion, comportant au moins un injecteur du type précité.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en coupe longitudinale d'un injecteur de carburant de l'art antérieur,
- les figures 2 à 5 sont des vues en coupe longitudinale d'une partie d'un injecteur selon l'invention, dans quatre positions successives de la soupape de dosage.

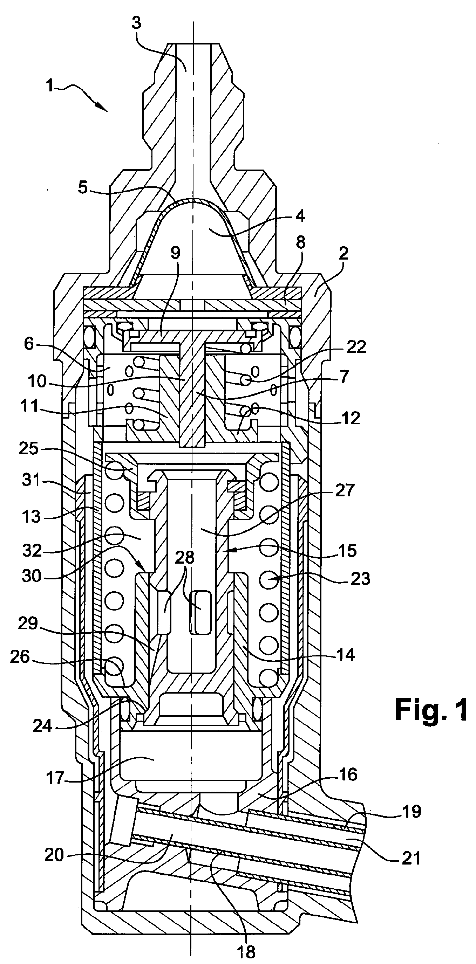

Un injecteur de carburant 1 tel que divulgué dans la demande de brevet FR 2 832 492 au nom de la Demanderesse est illustré à la figure 1.

Cet injecteur 1 est de type aéromécanique et comporte un circuit primaire de carburant destiné par exemple à une phase d'allumage et de faible puissance, et un circuit secondaire intervenant dans les phases de fonctionnement ultérieures, de moyenne à forte puissance, en complément du circuit primaire.

L'injecteur 4 comporte un corps 2 creux comprenant un orifice 3 d'admission de carburant, destiné à recevoir le carburant sous pression provenant d'une pompe à carburant non représentée, et débouchant dans une chambre de pré-admission 4 après avoir traversé une crépine de filtrage 5.

Le corps 2 comporte en outre une chambre d'admission 6 située en aval (dans le sens de circulation du carburant au sein de l'injecteur) de la chambre de pré-admission 4 et séparée de cette dernière par une soupape d'arrêt 7. Un diaphragme 8 est placé entre la chambre de pré-admission 4 et la soupape d'arrêt 7.

La soupape d'arrêt 7 comporte une tête 9 et une tige 10 montée de façon mobile dans une partie tubulaire 11 d'un support annulaire 12 fixe par rapport au corps 2. Ce dernier repose sur une douille tubulaire 13 s'étendant vers le bas et reposant elle-même sur un autre support tubulaire 14, dans lequel est monté une soupape de dosage 15. Le support 14 repose enfin sur une pièce 16 délimitant une chambre de réception 17 située sous la soupape de dosage 15 et servant au support de deux tubes coaxiaux 18, 19.

Le tube interne 18 forme un conduit 20 de circulation d'un flux de carburant primaire, l'espace annulaire ménagé entre les deux tubes 18, 19 formant un conduit 21 de circulation d'un flux de carburant secondaire.

Un espace annulaire 31 appartenant au circuit primaire est délimité entre la paroi externe de la douille 13 et le corps 2. La paroi interne de la douille 13 délimite en outre une chambre interne 32, située en amont de la soupape de dosage 15.

La soupape d'arrêt 7 est maintenue en position fermée par un ressort de rappel 22, l'ouverture de la soupape d'arrêt 7 s'effectuant lorsque la pression du carburant en amont de cette soupape dépasse une première valeur P1 déterminée.

La soupape de dosage 15 est également maintenue en position fermée par un ressort de rappel 23, l'ouverture de la soupape de dosage 15 s'effectuant lorsque la pression du carburant en amont de cette soupape 15 dépasse une seconde valeur P2 déterminée, supérieure à la première valeur P1 précitée.

La soupape de dosage 15 comporte une extrémité inférieure formant une tête destinée à reposer sur un siège 24 du support correspondant, et une extrémité supérieure au niveau de laquelle est fixée une coupelle 25. Le ressort de rappel s'appuie d'une part sur la coupelle 25 et d'autre part sur une surface radiale 26 du support 14.

La soupape de dosage 15 comporte un trou axial central 27 et des ouvertures radiales 28 débouchant dans le trou central 27 et dans des fentes de dosage 29 présentant des formes adaptées, ménagées dans la surface externe de la soupape de dosage 15.

La soupape de dosage 15 est mobile entre deux positions extrêmes, respectivement une position complètement fermée dans laquelle sa tête repose sur le siège 24 du support 14, sous l'action du ressort de rappel 23 correspondant, et une position complètement ouverte dans laquelle la coupelle 25 vient en butée contre l'extrémité supérieure 30 du support tubulaire 14.

En position complètement fermée de la soupape de dosage 15, représentée à la figure 1, les ouvertures 28 et les fentes 29 sont situées en regard du support tubulaire 14, l'extrémité inférieure des fentes 29 ne débouchant pas dans la chambre de réception 17. Dans cette position, le carburant présent dans la chambre 32 ne peut donc pas s'écouler dans la chambre de réception 17 et dans le conduit secondaire 21.

Lorsque la pression du carburant située dans la chambre 32 augmente, alors cette pression provoque le déplacement de la soupape de dosage 15 vers sa position d'ouverture, c'est-à-dire vers le bas, à l'encontre de l'effort exercé par le ressort de rappel 23.

Lorsque cette pression dépasse la seconde valeur P2, alors les fentes 29 débouchent dans la chambre de réception 17 et du carburant peut s'écouler dans le conduit secondaire 21.

Les géométries des fentes 29 sont telles que les sections de passage des fentes 29 varient en fonction de la position de la soupape de dosage 15. En particulier, plus la pression du carburant dans la chambre 27 est élevée, plus les sections de passage des fentes 29 sont grandes.

En fonctionnement, plusieurs cas peuvent se présenter.

Dans un premier cas, la pression du carburant dans la chambre de pré-admission 4 est inférieure à P1. La soupape d'arrêt 7 est alors maintenue en position fermée par le ressort de rappel 22 et le carburant ne s'écoule ni dans le conduit primaire 20, ni dans le conduit secondaire 21.

Dans un deuxième cas, correspondant à une phase d'allumage ou de fonctionnement à bas régime, la pression du carburant dans la chambre de pré-admission 4 est supérieure à P1, mais la pression du carburant dans la chambre 32 est inférieure à P2. La soupape d'arrêt 7 est alors ouverte et le carburant peut s'écouler dans l'espace annulaire 31 puis dans le conduit primaire 20 (circuit primaire). La soupape de dosage 15 reste toutefois fermée, et le carburant ne s'écoule pas dans le conduit secondaire 21.

Dans un troisième cas, correspondant à une phase de fonctionnement à moyen ou à plein régime, la pression du carburant dans la chambre de pré-admission 4 est supérieure à P1 et la pression du carburant dans la chambre 32 est supérieure à P2. La soupape d'arrêt 7 est ouverte et le carburant peut s'écouler dans l'espace annulaire 31 puis dans le conduit primaire 20 (circuit primaire). En outre, la soupape de dosage 15 est également ouverte et le fluide peut s'écouler au travers de la chambre 32, des ouvertures 28, des fentes 29, de la chambre de réception 17 puis du conduit secondaire 21 (circuit secondaire).

Comme indiqué précédemment, dans le deuxième cas de fonctionnement, le conduit secondaire 21 peut être soumis à un environnement très chaud et il existe un risque de cokéfaction du carburant présent dans ce conduit 21.

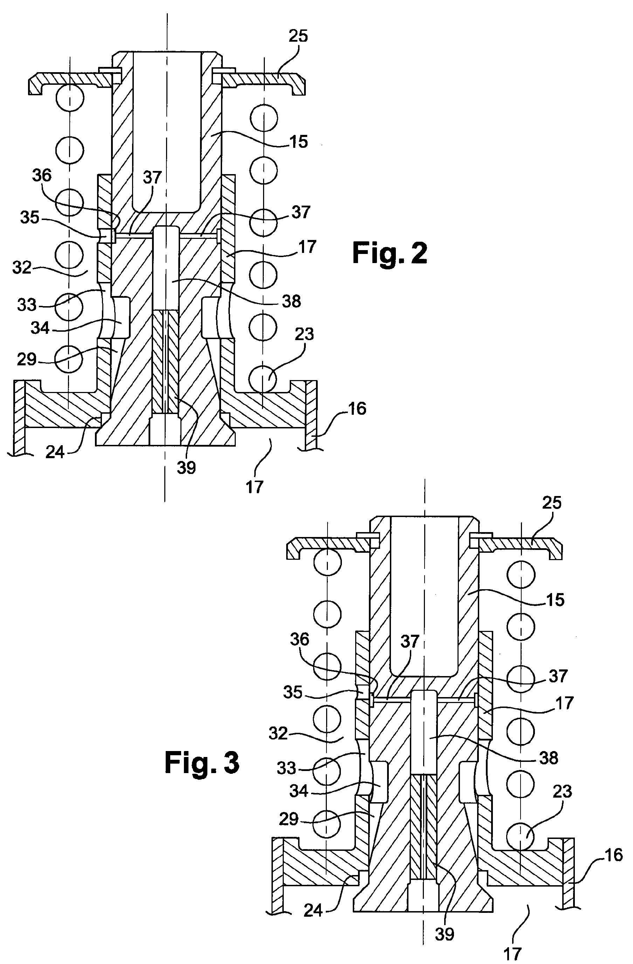

Les figures 2 à 5 illustrent une partie d'un injecteur selon l'invention, dans lequel le support tubulaire 17 comporte des ouvertures 33 situées, au moins en partie, en regard d'une gorge annulaire 34 ménagée dans la paroi externe de la soupape de dosage 15. Les fentes 29 s'étendent axialement et débouchent, à leur extrémité supérieure, dans la gorge annulaire 34.

Les ouvertures 33 et la gorge annulaire 34 sont dimensionnées de telle façon que, quelle que soit la position de la soupape d'admission 15, au moins une partie des ouvertures 33 est située en regard de la gorge annulaire 34.

Le support tubulaire 17 comporte en outre au moins un orifice 35 situé, au moins en partie, en regard d'une gorge annulaire 36 ménagée dans la paroi externe de la soupape de dosage 15, en position complètement fermée de la soupape de dosage 15, c'est-à-dire lorsqu'elle repose sur son siège 24.

La gorge 36 est située au-dessus de la gorge 34. Des canaux de fuite 37 s'étendent radialement dans la soupape de dosage 15 et débouchent dans la gorge 36, d'une part, et dans un trou central axial 38 de la soupape de dosage 15, d'autre part. Le trou central 38 débouche au niveau de la tête de la soupape 15, dans la chambre de réception 17. Des moyens 39 de calibration du débit de fuite sont montés dans le trou central 38.

De cette manière, lorsque l'orifice 35 est situé en regard de la gorge 36, alors un débit de fuite de carburant peut traverser successivement l'orifice 35, la gorge 36, les canaux de fuite 37, le trou 38, les moyens de calibration 39 et la chambre de réception 17 pour assurer une circulation de carburant dans le conduit secondaire 21.

Lors du déplacement de la soupape de dosage 15, le débit de fuite est interrompu lorsque la gorge 37 est écartée axialement de l'orifice 35 de façon à fermer les canaux de fuite 37.

La course totale de la soupape de dosage 15 entre ses deux positions extrêmes peut être décomposée en une première partie dans laquelle la soupape 15 reste fermée, et une seconde partie dans laquelle la soupape 15 est ouverte progressivement.

L'orifice 35 et la gorge 36 sont dimensionnés de telle façon que la fermeture des canaux de fuite 37 s'opère sur la première partie de la course de la soupape de dosage 15, c'est-à-dire avant que les fentes 29 ne débouchent dans la chambre de réception 17.

Les figures 2 à 4 représentent différentes position successives de la soupape de dosage 15, illustrant le fonctionnement de l'injecteur selon l'invention.

La figure 2 représente la soupape de dosage 15 dans sa position complètement fermée dans laquelle elle repose sur son siège 24. Dans cette position, l'orifice 35 est situé en regard de la gorge 36, de façon à établir un débit de fuite et une circulation de carburant au travers du conduit secondaire 21, lors des phases d'allumage et de fonctionnement à faible régime de la turbomachine.

Le débit de fuite est par exemple inférieur à 1 litre par heure, de préférence de l'ordre de 0,5 litre par heure.

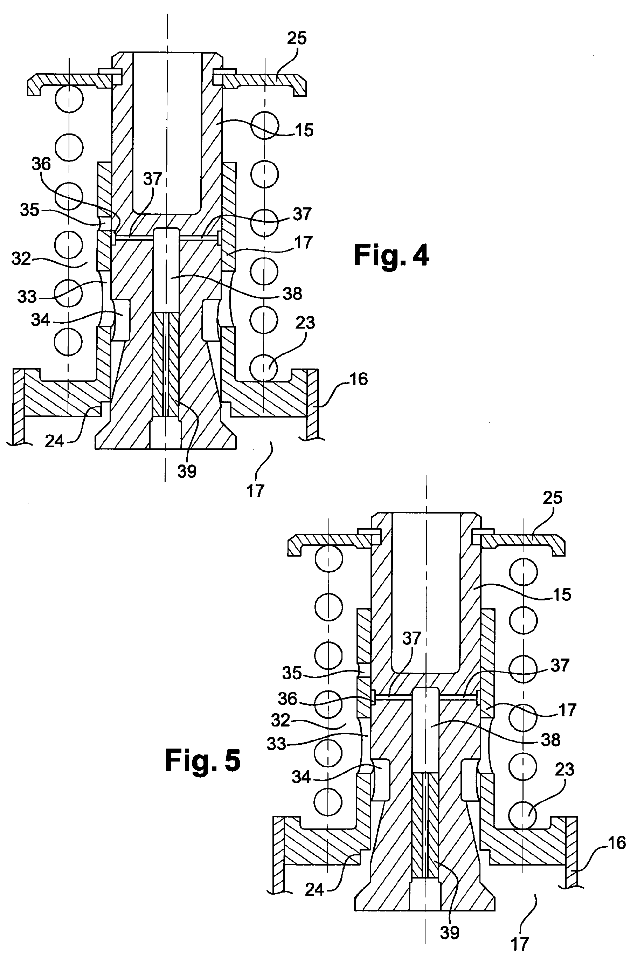

Lorsque la pression du carburant en amont de la soupape de dosage augmente, cette dernière est déplacée vers le bas, de façon à écarter progressivement la gorge 36 de l'orifice 35 (figure 3), jusqu'à ce que les canaux de fuite 37 soient complètement fermés (figure 4).

En augmentant encore la pression du carburant en amont de la soupape de dosage 15, par exemple lors d'une phase à moyen ou à plein régime), les fentes 29 débouchent dans la chambre de réception 17 et le carburant peut circuler dans le conduit secondaire 21 (figure 5).

L'invention propose ainsi un injecteur permettant d'éviter la cokéfaction du carburant présent dans le circuit secondaire lors des phases d'allumage et à faible régime, sans toutefois pénaliser les performances de la turbomachine à moyen ou à fort régime.

## Revendications

1. Injecteur (1) de carburant pour une turbomachine telle qu'un turboréacteur ou un turbopropulseur d'avion, comportant un corps (2) comprenant des moyens (3) d'admission de carburant sous pression, une soupape d'arrêt (7) montée dans le corps (2) en aval des moyens (3) d'admission et conçue pour s'ouvrir sous une première pression déterminée de carburant et pour rester ouverte au-delà de cette première pression afin d'alimenter un circuit primaire de carburant (31, 20), une soupape de dosage (15) montée dans le corps (2) en aval de la soupape d'arrêt (7) et conçue pour s'ouvrir au-delà d'une seconde pression déterminée de carburant, supérieure à la première pression, et pour rester ouverte au-delà de la seconde pression afin d'alimenter un circuit secondaire de carburant (17, 21),
**caractérisé en ce qu'**il comporte au moins un canal de fuite (36, 37, 38) s'étendant depuis une zone (32) située en aval de la soupape d'arrêt (7) et en amont de la soupape de dosage (15) jusque dans une zone (17) située en aval de la soupape de dosage (15), destiné à générer un débit de fuite dans le circuit secondaire (17, 21), le canal de fuite (36, 37, 38) étant conçu pour être ouvert dans une position de fermeture de la soupape de dosage (15) et pour être fermé par déplacement de la soupape de dosage (15).

2. Injecteur selon la revendication 1, **caractérisé en ce que** le corps (2) comporte au moins une première chambre (32) située en aval de la soupape d'arrêt (7) et en amont de la soupape de dosage (15), reliée fluidiquement ou appartenant au circuit primaire de carburant (31, 20), au moins une seconde chambre (17) située en aval de la soupape de dosage (15) et apte à être isolée de la première chambre (32) par la soupape de dosage (15) lorsque celle-ci est fermée, la seconde chambre (17) étant reliée fluidiquement ou appartenant au circuit secondaire de carburant (17, 21), le canal de fuite (36, 37, 38) étant ménagé dans la soupape de dosage (15) de façon à relier les première et seconde chambres (32, 17) dans une position fermée de la soupape de dosage (15).

3. Injecteur selon l'une des revendications 1 ou 2, **caractérisé en ce que** la soupape de dosage (15) est fermée sur une première partie de sa course puis ouverte progressivement sur une seconde partie de sa course, la fermeture du canal de fuite (36, 37, 38) s'opérant sur la première partie de la course de la soupape de dosage (15).

4. Injecteur selon l'une des revendications 1 à 3, **caractérisé en ce que** le canal de fuite (36, 37, 38) comporte des moyens (39) de calibration du débit de fuite.

5. Injecteur selon l'une des revendications 2 à 4, **caractérisé en ce que** la soupape de dosage (15) est montée mobile de façon étanche dans une partie tubulaire (14) fixe par rapport au corps (2), la partie tubulaire (14) comportant au moins un orifice de fuite (35), le canal de fuite (36, 37, 38) ménagé dans la soupape de dosage (15) comportant une première extrémité (36) destinée à déboucher en regard de l'orifice de fuite (35) dans une position fermée de la soupape de dosage (15) et à être éloignée de l'orifice de fuite (35) par déplacement de la soupape de dosage (15), le canal de fuite (36, 37, 38) comportant en outre une seconde extrémité (38) débouchant dans la seconde chambre (17).

6. Injecteur selon l'ensemble des revendications 4 et 5, **caractérisé en ce que** le canal de fuite (36, 37, 38) comporte une partie (38) s'étendant selon l'axe de la soupape de dosage (15), débouchant dans la seconde chambre (17) et dans laquelle sont montés les moyens (39) de calibration du débit de fuite, et une partie radiale (36, 37) débouchant dans la partie axiale (38) du canal de fuite (36, 37, 38) et en regard de l'orifice de fuite (35).

7. Turbomachine, telle qu'un turboréacteur ou un turbopropulseur d'avion, comportant au moins un injecteur (1) selon l'une des revendications 1 à 6.

## Patentansprüche

1. Treibstoffeinspritzer (1) für eine Turbomaschine, wie z. B. ein Turboreaktor oder ein Turboantrieb eines Flugzeugs, umfassend einen Körper (2), umfassend Einlassmittel (3) des unter Druck stehenden Treibstoffs, ein Abschaltventil (7), das den Einlassmitteln (3) nachgeschaltet in den Körper (2) montiert und konzipiert ist, um sich unter einem ersten bestimmten Treibstoffdruck zu öffnen und um über diesen ersten Druck hinweg offen zu bleiben, um einen primären Triebstoffkreislauf (31, 20) zu versorgen, ein Dosierungsventil (15), das dem Abschaltventil (7) nachgeschaltet in den Körper (2) montiert und konzipiert ist, um sich über einen zweiten bestimmten, Treibstoffdruck zu öffnen, der höher ist als der erste Druck, und um über den zweiten Druck hinweg offen zu bleiben, um einen zweiten Treibstoffkreislauf (17, 21) zu versorgen,
**dadurch gekennzeichnet, dass** er wenigstens einen Leckkanal (36, 37, 38) umfasst, der sich von einem Bereich (32) erstreckt, der sich dem Abschaltventil (7) nachgeschaltet und dem Dosierungsventil (15) vorgeschaltet bis in einen Bereich (17) erstreckt, der sich unterhalb des Dosierungsventils (15) befindet, der dazu bestimmt ist, einen Leckdurchsatz in einem sekundären Kreislauf (17, 21) zu generieren, wobei der Leckkanal (36, 37, 38) konzipiert ist, um in einer Verschlussposition des Dosierungsventils (15) offen zu sein und um per Verschiebung des Dosierungsventils (15) geschlossen zu sein.

2. Einspritzer gemäß Anspruch 1, **dadurch gekennzeichnet, dass** der Körper (2) wenigstens eine erste Kammer (32) umfasst, die sich dem Abschaltventil (7) nachgeschaltet und dem Dosierungsventil (15) vorgeschaltet befindet, das fluidisch verbunden ist oder zum primären Treibstoffkreislauf (31, 20) gehört, wenigstens eine zweite Kammer (17), die sich dem Dosierungsventil (15) nachgeschaltet befindet und geeignet ist, non der ersten Kammer (32) durch das Dosierungsventil (15) isoliert zu sein, wenn dieses geschlossen ist, wobei die zweite Kammer (17) fluidisch verbunden ist oder zum sekundären Treibstoffkreislauf (17, 21) gehört, wobei der Leckkanal (36, 37, 38) in dem Dosierungsventil (15) derart ausgespart ist, dass die erste und die zweite Kammer (32, 17) in einer geschlossenen Position des Dosierungsventils (15) verbunden sind.

3. Einspritzer gemäß Anspruch 1 oder 2, **dadurch gekennzeichnet, dass** das Dosierungsventil (15) auf einem ersten Teil seines Laufs geschlossen und dann progressiv auf einem zweiten Teil seines Laufs geöffnet ist, wobei der Verschluss des Leckkanals (36, 37, 38) auf dem ersten Teil des Laufs des Dosierungsventils (15) betrieben wird.

4. Einspritzer gemäß Anspruch 1 bis 3, **dadurch gekennzeichnet, dass** der Leckkanal (36, 37. 38) Kalibrierungsmittel (39) des Leckdurchsatzes umfasst.

5. Einspritzer gemäß Anspruch 2 bis 4, **dadurch gekennzeichnet, dass** das Dosierungsventil (15) mobil abgedichtet in einem röhrenförmigen Teil (14) montiert ist, der im Verhältnis zum Körper (2) feststehend ist, wobei der röhrenförmige Teil (14) wenigstens eine Lecköffnung (35) umfasst, wobei der in dem Dosierungsventil (15) ausgesparte Leckkanal (36, 37, 38) ein erstes Ende (36) umfasst, das dazu bestimmt ist, gegenüber der Lecköffnung (35) in einer geschlossenen Position des Dosierungsventils (15) einzumünden und von der Lecköffnung (35) per Verschiebung des Dosierungsventils (15) entfernt zu sein, wobei der Leckkanal (36, 37, 38) darüber hinaus ein zweites Ende (38) umfasst, das in die zweite Kammer (17) einmündet.

6. Einspritzer gemäß Anspruch 4 und 5, **dadurch gekennzeichnet, dass** der Leckkanal (36, 37, 38) einen Teil (38) umfasst, der sich gemäß der Achse des Dosierungsventils (15) erstreckt, das in der zweiten Kammer (17) einmündet und in dem die Kalibrierungsmittel (39) des Leckdurchsatzes montiert sind, und einen radialen Teil (36, 37), der in den axialen Teil (38) des Leckkanals (36, 37, 38) und gegenüber der Lecköffnung einmündet.

7. Turbomaschine gemäß einem Turboreaktor und einem Turboantrieb eines Flugzeugs, umfassend wenigstens einen Einspritzer (1) gemäß Anspruch 1 bis 6.

## Claims

1. A fuel injector (1) for a turbine engine such as an airplane turboprop or turbojet, the injector comprising a body (2) having admission means (3) for admitting fuel under pressure, a stop valve (7) mounted in the body (2) downstream from the admission means (3) and designed to open at a first determined fuel pressure and to remain open beyond said first pressure in order to feed a primary fuel circuit (31, 20), and a metering valve (15) mounted in the body (2) downstream from the stop valve (7) and designed to open beyond a second determined fuel pressure greater than the first pressure, and to remain open beyond the second pressure in order to feed a secondary fuel circuit (17, 21), **characterized in that** the injector being **characterized in that** it includes at least one leakage channel (36, 37, 38) extending from a zone (32) situated downstream from the stop valve (7) and upstream from the metering valve (15) to a zone (17) situated downstream from the metering valve (15) in order to generate a permanent leakage flow in the secondary circuit (17, 21), the leakage channel (36, 37, 38) being designed to be open in a closed position of the metering valve (15) and to be closed by the metering valve (15) moving.

2. An injector according to claim 1, **characterized in that** the body (2) includes at least a first chamber (32) situated downstream from the stop valve (7) and upstream from the metering valve (15), in fluid flow connection with or belonging to the primary fuel circuit (31, 20), at least a second chamber (17) situated downstream from the metering valve (15) and suitable for being isolated from the first chamber (32) by the metering valve (15) when it is closed, the second chamber (17) being in fluid flow connection with or forming part of the secondary fuel circuit (17, 21), the leakage channel (36, 37, 38) being formed in the metering valve (15) so as to connect together the first and second chambers (32, 17) when the metering valve (15) is in a closed position.

3. An injector according to claim 1 or claim 2, **characterized in that** the metering valve (15) is closed over a first portion of its stroke and then opens progressively over a second portion of its stroke, closure of the leakage channel (36, 37, 38) taking place over the first portion of the stroke of the metering valve (15).

4. An injector according to any one of claims 1 to 3, **characterized in that** the leakage channel (36, 37, 38) includes calibration means (39) for calibrating the leakage flow rate.

5. An injector according to any one of claims 2 to 4, **characterized in that** the metering valve (15) is mounted to move in sealed manner in a tubular portion (14) that is stationary relative to the body (2), the tubular portion (14) including at least one leakage orifice (35), the leakage channel (36, 37, 38) formed in the metering valve (15) including a first end (36) for opening out facing the leakage orifice (35) when the metering valve (15) is in a closed position and for being moved away from the leakage orifice (35) by the movement of the metering valve (15), the leakage channel (36, 37, 38) also including a second end (38) that opens out into the second chamber (17).

6. An injector according to claims 4 and 5 taken together, **characterized in that** the leakage channel (36, 37, 38) includes a portion (38) extending along the axis of the metering valve (15), opening out into the second chamber (17), and having mounted therein the leakage flow rate calibration means (39), and a radial portion (36, 37) opening out into the axial portion (38) of the leakage channel (36, 37, 38) and facing the leakage orifice (35).

7. A turbine engine such as an airplane turboprop or turbojet including at least one injector (1) according to any one of claims 1 to 6.
